# EUROPÄISCHE PATENTANMELDUNG

(11) **EP 3 202 296 A1**
(43) Veröffentlichungstag der Anmeldung: **09.08.2017**
(21) Anmeldenummer: 17152431.7
(22) Anmeldetag: 20.01.2017
(51) Int. Cl.: A47K 10/38, F16B 2/24, A45F 5/02

(54) **GÜRTELHALTERUNG FÜR EINE WERKSTOFFROLLE, INSBESONDERE FÜR EINE GIPSBINDERROLLE**

(30) Priorität: 20.01.2016 DE 102016100946
(71) Anmelder: Dimitrijev, Jasminka, 30449 Hannover (DE)
(72) Erfinder: Dimitrijev, Rade, 30449 Hannover (DE)
(74) Vertreter: Holz, Christian

(57) **Zusammenfassung**

Die vorliegende Erfindung betrifft eine Gürtelhalterung (1) für eine Werkstoffrolle (2), insbesondere für eine Gipsbinderrolle (2), mit einem Befestigungsbügel (10) zur Befestigung der Gürtelhalterung (1) an einem Gürtel einer Person und einem Haltebügel (11) zur Aufnahme der Werkstoffrolle (2). Die Gürtelhalterung (1) ist dadurch gekennzeichnet, dass der Haltebügel (11) in der Höhe (Z) eine nach unten hin verengend zulaufende Senke (12) aufweist, welche ausgebildet ist, auf die aufgenommene Werkstoffrolle (2) in radialer Richtung (X) beidseitig von außen zumindest abschnittsweise eine Klemmwirkung ausüben zu können, und bzw. oder dass der Haltebügel (11) in der Höhe (Z) ein nach oben hin verengend zulaufendes offenes Ende (13) aufweist, welches ausgebildet ist, auf die aufgenommene Werkstoffrolle (2) in Querrichtung (Y) beidseitig von innen zumindest abschnittsweise eine Klemmwirkung ausüben zu können.

## Beschreibung

Die vorliegende Erfindung betrifft eine Gürtelhalterung für eine Werkstoffrolle, insbesondere für eine Gipsbinderrolle, gemäß dem Oberbegriff des Anspruchs 1.

Im Bereich des Trockenbaus werden u.a. Gipskartonplatten verlegt, um glatte Wände, Decken, Dachschrägen und dergleichen zu schaffen. Die aneinander grenzenden Gipskartonplatten können zwischen sich Fugen ausbilden, welche anschließend mit einer Spachtelmasse gefüllt werden. Die Spachtelmasse ist glatt aufzubringen bzw. glatt zu streichen, um einen glatten und sauberen Übergang von einer Gipskartonplatte zur nächsten zu gewährleisten und hierdurch eine insgesamt glatte Oberfläche zu erzeugen.

In die Spachtelmasse wird üblicherweise eine stoffartige Binde eingearbeitet, welche der Vermeidung von Rissbildung in der gespachtelten Fuge dient und auch als Glasfaser-Fugenstreifen oder einfach auch als Gipsbinder bezeichnet werden kann. Mit anderen Worten dient der Gipsbinder der Bewehrung der gespachtelten Fuge. Der Gipsbinder wird aufgerollt bereitgestellt und von Hand über die gespachtelte Fuge gezogen. In der Länge kann der Gipsbinder z.B. durch eine Kante eines Spachtelwerkzeugs abgetrennt werden. Genauer gesagt wird zunächst die Fuge mit Spachtelmasse gefüllt, dann der Gipsbinder der Länge nach über die Spachtelmasse der Fuge gezogen und aufgedrückt und schließlich die Fuge samt Gipsbinder mit einer weiteren Schicht Spachtelmasse glattgezogen.

Alle diese Arbeitsschritte erfolgen üblicherweise als Handarbeit ein und derselben Person. Hierzu ist es erforderlich, dass die Person nach dem ersten Spachteln der Fuge das Spachtelwerkzeug weglegt, um den Gipsbinder mit beiden Händen auf der Spachtelmasse anbringen und abrollen bzw. über die Spachtelmasse herüberziehen zu können. Nach dem Abtrennen der überschüssigen Gipsbinderrolle von dem verlegten Gipsbinder ist diese übrige Gipsbinderrolle wieder aus der Hand zu legen, um die zweite Schicht der Spachtelmasse über den aufgetragenen Gipsbinder aufbringen zu können. Somit ist die übrige Gipsbinderrolle beim Verlegen mit beiden Händen zu handhaben und zwischen den zuvor beschriebenen Arbeitsschritten aus den Händen zu legen.

Nachteilig ist hierbei, dass Werkstoffrollen wie z.B. Gipsbinder als Glasfaser-Fugenstreifen eine Eigenspannung besitzen und sich somit selbstständig abrollen können, sobald sie frei abgelegt werden, weshalb dies zu vermeiden ist. Insbesondere sollte eine Werkstoffrolle nicht auf dem Boden abgelegt werden, weil Personen hierüber stolpern können. Auch kann die Werkstoffrolle auf dem Boden schmutzig und bzw. oder nass werden. Ferner kann eine Person gegen bzw. auf die auf dem Boden liegende Werkstoffrolle treten, wodurch diese beschädigt oder zumindest teilweise platt getreten und damit unbrauchbar gemacht werden kann.

Um das Ablegen einer Werkstoffrolle zu vermeiden, kann diese z.B. von der Person in eine Hosentasche gesteckt werden. Auf diese Weise sind beide Hände frei und das selbstständige Abrollen der Werkstoffrolle kann vermieden werden.

Nachteilig ist hierbei jedoch, dass sich die Person hierdurch gestört fühlen kann, insbesondere beim Hinknien oder Hinsetzen, was bei der Montage von z.B. Gipskartonplatten bzw. beim Spachteln von Fugen vom Boden aus erforderlich sein kann. Nachteilig kann ferner sein, dass es sehr umständlich und auch langwierig sein kann, die Werkstoffrolle in die Tasche zu stecken bzw. diese aus der Tasche zu entnehmen, insbesondere beim Knien oder Sitzen.

Daher ist es bekannt, die Werkstoffrolle in eine nach oben offene Gürteltasche zu stecken, um die Hände frei zu haben und ein selbstständiges Abrollen zu verhindern. Gleichzeitig kann die Gürteltasche seitlich oder hinten am Gürtel getragen werden, so dass die Gürteltasche beim Sitzen oder Knien nicht stört.

Nachteilig ist jedoch, dass die Gürteltasche entweder auf einen Gürtel aufgeschoben werden muss, den die Person in der Hose trägt. Hierzu muss der Gürtel aus einigen Laschen der Hose herausgezogen, die Gürteltasche aufgeschoben und dann der Gürtel wieder in die Laschen der Hose eingeführt werden. Dies gilt sowohl für das Anlegen als auch das Ablegen der Gürteltasche, was dessen Benutzung umständlich machen kann. Alternativ kann die Gürteltasche mittels eines eigenen zusätzlichen Gürtels getragen werden, so dass der Gürtel der Hose unverändert verwendet werden kann. Dies erfordert einen zusätzlichen Gürtel, was den Aufwand der Nutzung des Gürteltasche vergrößert. Ferner muss dieser zusätzliche Gürtel zusätzlich an- bzw. abgeschnallt werden. Des Weiteren ist dieser zusätzliche Gürtel zu öffnen und abzulegen, falls die Person den Gürtel der Hosen öffnen möchte, was ebenfalls sehr umständlich sein kann.

Nachteilig ist sowohl beim Hineinstecken in eine Hosentasche als auch in eine Gürteltasche, dass Werkstoffrollen wie z.B. Gipsbinder aus Glasfasern sehr empfindlich gegenüber Reißen sein können. Daher kann eine Werkstoffrolle beim Hineinstecken in eine Hosentasche oder eine Gürteltasche ein- oder durchreißen oder an den Kanten knicken und dadurch beschädigt werden. Auch kann die Werkstoffrolle beim Hineinstecken, beim Herausholen oder in der Hosentasche oder Gürteltaschen mit ihren Seitenflächen reiben und hierdurch beschädigt werden. Wird dabei eine vordere Hosentasche genutzt oder die Gürteltasche vorne getragen, so kann dies besonders bei der Arbeit stören.

Aus der DE 200 07 490 U1 ist eine Halterungsvorrichtung, insbesondere für Werkzeuge, bekannt, welche mittels eines Federbügels z.B. von oben über einen Gürtel gesteckt und mittels Federkraft auf diesem gehalten werden kann. Mit dem Federbügel ist mittels eines Gelenks ein U-förmiger Haltebügel verbunden, welcher insbesondere ein Werkzeug halten kann, welches von oben über das offene Ende des Haltebügels eingehängt werden kann. Mittels des Gelenks kann der Haltebügel in beide Richtungen parallel zum Federbügel geschwenkt werden, um ein unbeabsichtigtes Verheddern mit der Arbeitsumgebung zu verhindern.

Nachteilig ist hierbei, dass die Haltevorrichtung der DE 200 07 490 U1 nicht zur Aufnahme einer Werkstoffrolle wie insbesondere einer Gipsbinderrolle geeignet ist, weil sich eine auf dem Haltebügel aufgenommene Werkstoffrolle selbsttätig abrollen könnte, insbesondere bei einer Gipsbinderrolle aufgrund ihrer Eigenspannung. Auch werden das Einhängen sowie das Greifen einer Werkstoffrolle durch die Schwenkbarkeit des Haltebügels um dessen Gelenk erschwert. Ferner könnte eine auf dem Haltebügel aufgenommene Werkstoffrolle aufgrund ihres geringen Gewichts bei jeder Bewegung der Person um die Achse des Gelenks um bis zu 180° schwenken, wodurch sich die Rolle, insbesondere aufgrund ihrer Eigenspannung, zunehmend selbsttätig abrollen könnte. Des Weiteren kann eine Gipsbinderrolle an dem kugelförmigen offenen Ende der Haltevorrichtung der DE 200 07 490 U1 bei Abnehmen von unten hängen bleiben und hierdurch auseinandergezogen und bzw. oder abgerollt werden, was die Gipsbinderrolle unbrauchbar oder zumindest schwierig zu handhaben machen könnte.

Eine Aufgabe der vorliegenden Erfindung ist es, eine Gürtelhalterung für eine Werkstoffrolle, insbesondere für eine Gipsbinderrolle, der eingangs beschriebenen Art bereit zu stellen, sodass die Werkstoffrolle einfach und schnell aus den Händen einer Person gegeben, dabei gegen Abrollen gesichert und gleichzeitig vor Reißen, Knicken und bzw. oder Reiben geschützt und auch wieder einfach und schnell von der Person gegriffen werden kann. Zumindest soll eine alternative Gürtelhalterung für eine Werkstoffrolle, insbesondere für eine Gipsbinderrolle, als bisher bekannt bereitgestellt werden.

Die Aufgabe wird erfindungsgemäß durch die Merkmale des kennzeichnenden Teils des Anspruchs 1 gelöst. Vorteilhafte Weiterbildungen sind in den Unteransprüchen beschrieben.

Somit betrifft die vorliegende Erfindung eine Gürtelhalterung für eine Werkstoffrolle, insbesondere für eine Gipsbinderrolle, jedoch auch für andere aufgerollte Werkstoffe, die z.B. beim Handwerk und auf dem Bau und insbesondere beim Trockenbau verwendet werden können. Die Gürtelhalterung weist einen Befestigungsbügel zur Befestigung der Gürtelhalterung an einem Gürtel oder an einem Hosenbund einer Person auf, weshalb mit der erfindungsgemäßen Gürtelhalterung auch eine Hosenhalterung bzw. Hosenbundhalterung gemeint sein kann.

Die Gürtelhalterung weist ferner einen Haltebügel zur Aufnahme der Werkstoffrolle auf. Dabei ist erfindungsgemäß die Gürtelhalterung dadurch gekennzeichnet, dass der Haltebügel in der Höhe eine nach unten hin verengend zulaufende Senke aufweist, welche ausgebildet ist, auf die aufgenommene Werkstoffrolle in radialer Richtung beidseitig von außen zumindest abschnittsweise eine Klemmwirkung ausüben zu können. Mit anderen Worten ist die Senke in radialer Richtung grundsätzlich V-förmig ausgebildet, so dass sich die geraden Flanken des Haltebügels nach unten zur Senke hin in radialer Richtung einander annähern und sich hierdurch zueinander hin verengen. Auf diese Weise kann die Werkstoffrolle mit ihrer Öffnung in Form eines Mittellochs von oben auf das offene Ende des Haltebügels aufgeschoben werden, so dass die Werkstoffrolle von außen zwischen den Flanken des Haltebügels in radialer Richtung geklemmt und hierdurch gehalten und gleichzeitig gegen Abrollen gesichert werden kann. Dabei werden die Seiten bzw. Kanten der Werkstoffrolle frei in der Luft gehalten, so dass sie nicht beschädigt werden können.

Alternativ oder zusätzlich ist die Gürtelhalterung erfindungsgemäß dadurch gekennzeichnet, dass der Haltebügel in der Höhe ein nach oben hin verengend zulaufendes offenes Ende aufweist, welches ausgebildet ist, auf die aufgenommene Werkstoffrolle in Querrichtung beidseitig von innen zumindest abschnittsweise eine Klemmwirkung ausüben zu können. Mit anderen Worten ist das offene Ende in Querrichtung grundsätzlich V-förmig ausgebildet, so dass sich die Flanken des Haltebügels nach oben zum offenen Ende hin in Querrichtung einander annähern und sich hierdurch zueinander hin verengen. Auf diese Weise kann die Werkstoffrolle mit ihrer Öffnung in Form eines Mittellochs von oben auf das offene Ende des Haltebügels aufgeschoben werden, so dass die Werkstoffrolle von innen von den Flanken des Haltebügels in Querrichtung geklemmt und hierdurch gehalten und gleichzeitig gegen Abrollen gesichert werden kann. Dabei werden die Seiten bzw. Kanten der Werkstoffrolle frei in der Luft gehalten, so dass sie nicht beschädigt werden können.

Dabei kann sowohl ein geklemmtes Halten der Werkstoffrolle auf eine der beiden zuvor beschriebenen Varianten erfolgen oder es können beide Varianten gleichzeitig angewendet werden, um die Klemmung insgesamt zu verstärken bzw. die Klemmung in unterschiedlichen Situationen und insbesondere bei unterschiedlichen Dicken der Werkstoffrolle sicherzustellen. Denn eine "frische", d.h. vollständige und unbenutzte, Werkstoffrolle mit maximalem Durchmesser kann sich eher in der Höhe an einer oberen Position des offenes Endes bzw. der Flanken der Senke des Haltebügels von innen und außen klemmen lassen. Nimmt der Radius der Werkstoffrolle durch die Verwendung des Werkstoffes ab, so kann die Werkstoffrolle immer weiter über das offene Ende in der Höhe nach unten zur Senke hin positioniert werden können. In letztem Fall kann die Klemmung bei nur noch geringem Radius der Werkstoffrolle nur noch von innen erfolgen, wobei das lose Ende des Werkstoffs immer noch zwischen den Flanken der Senke lose gehalten werden bzw. an den Flanken der Senke anliegen kann.

In beiden Varianten und in allen Abrollzuständen der Werkstoffrolle kann auf diese Weise erfindungsgemäß die Werkstoffrolle sicher gehalten und gegen selbsttätiges Abrollen gesichert werden, ohne hierbei den Werkstoff zu Knicken, zu Reiben oder dergleichen. Dies ist insbesondere bei Gipsbinderrollen aufgrund ihrer Eigenspannung vorteilhaft.

Ferner kann in beiden Varianten das lose Ende der Werkstoffrolle frei in der Luft hängen, was sehr schonend für das Material der Werkstoffrolle sein und diese vor Knicken, Reiben etc. schützen kann. Dies gilt auch für ein längeres loses Ende der Werkstoffrolle, so dass die Vorteile der erfindungsgemäßen Gürtelhalterung in verschiedenen Abrollzuständen des losen Endes der Werkstoffrolle zum Tragen kommen können.

Vorteilhaft ist bei der erfindungsgemäßen Gürtelhalterung, dass diese durch Aufstecken auf den Gürtel oder den Hosenbund sehr flexibel positioniert vom Benutzer getragen werden kann. Auf diese Weise kann die erfindungsgemäße Gürtelhalterung von verschiedenen Benutzern je nach der persönlichen Vorliebe, Gewohnheit und Arbeitsweise genutzt werden. Auch kann die erfindungsgemäße Gürtelhalterung von Links- und Rechtshändern gleichermaßen verwendet werden.

Vorteilhaft ist hierbei auch, dass die erfindungsgemäße Gürtelhalterung hinten bzw. seitlich hinten am Gürtel bzw. am Hosenbund getragen werden kann. Auf diese Weise kann eine Störung durch die in der Gürtelhalterung aufgenommene Werkstoffrolle beim z.B. Knien, Hocken oder Sitzen vermieden werden. Auch kann die Werkstoffrolle in dieser Position für den Benutzer sehr gut aufsteckbar bzw. greifbar sein, auch ohne dafür hinsehen zu müssen.

Gemäß einem Aspekt der vorliegenden Erfindung ist die Senke des Haltebügels in der Höhe unten rund ausgebildet ist. Mit anderen Worten verlaufen die Flanken des Haltebügels zur Senke hin vorzugsweise geradlinig sich verengend, bevor sich eine runde Senke ausbildet. Auf diese Weise kann eine Vermeidung bzw. Reduzierung von Beschädigungen der aufgenommenen Werkstoffrolle an deren Kanten erreicht werden. Auch können Verletzungen der Person oder anderer Personen sowie Beschädigungen der Umgebung und auch z.B. Hose der Person durch die runde Senke vermieden werden.

Gemäß einem weiteren Aspekt der vorliegenden Erfindung ist das offene Ende des Haltebügels in der Höhe oben rund ausgebildet. Auf diese Weise kann eine Vermeidung bzw. Reduzierung von Beschädigungen der aufgenommenen Werkstoffrolle an deren Kanten erreicht werden. Auch können Verletzungen der Person oder anderer Personen sowie Beschädigungen der Umgebung durch das runde offene Ende vermieden werden. Auch kann das offene Ende auf diese Weise taktil einfacher zu finden sein, da die innenliegende Öffnung der Werkstoffrolle sich selbst auf das offene Ende des Haltebügels führen kann.

Gemäß einem weiteren Aspekt der vorliegenden Erfindung weist der Haltebügel zwei Schenkel auf, welche zueinander in Querrichtung beabstandet sind, wobei die beiden Schenkel gemeinsam die Senke bilden und am offenen Ende ineinander übergehen. Auf diese Weise können die beiden Flanken der Senke, welche in radialer Richtung zueinander V-förmig beabstandet sind, durch die beiden in Querrichtung zueinander beabstandeten Schenkel des Haltebügels gebildet werden, welche am offenen Ende miteinander verbunden sind. Hierdurch kann der Haltebügel aus einem Strang gebildet werden, welcher derart geformt und insbesondere gebogen ist, dass nacheinander ein Schenkel der Senke, das offene Ende und dann der andere Schenkel der Senke ausgebildet werden.

Vorteilhaft ist hierbei, dass der Haltebügel aus einem Stück z.B. als gebogenes Metallteil hergestellt werden kann. Vorteilhaft ist auch, dass durch eine Federwirkung zwischen den Schenkeln des Haltebügels sowohl in Querrichtung im Bereich des offenen Endes als auch in radialer Richtung im Bereich der Senke bzw. der Flanken der Senke eine Federwirkung erreicht werden kann, welche zu den gewünschten Klemmwirkungen führen bzw. diese begünstigen kann.

Gemäß einem weiteren Aspekt der vorliegenden Erfindung ist der Haltebügel, insbesondere sind die beiden Schenkel, feststehend mit dem Befestigungsbügel verbunden. Dies kann durch eine einteilige Ausbildung von Haltebügel und Befestigungsbügel erfolgen, z.B. durch eine formschlüssige, kraftschlüssige und bzw. oder stoffschlüssige Verbindung. Im Falle eines Haltebügels und eines Befestigungsbügels aus Metall und insbesondere aus Eisen oder Stahl kann diese Verbindung eine Schweißverbindung sein, welche einfach herzustellen und sehr haltbar sein kann.

Den Haltebügel und des Befestigungsbügel feststehend miteinander verbunden vorzusehen kann mechanisch einfach umzusetzen sowie günstig in der Herstellung sein, weil auf Verbindungselemente und deren Montageschritte zwischen den beiden Bügeln verzichtet werden kann. Auch können Verschleiß und Spiel zueinander beweglicher Bauteile an einer derartigen Verbindungsstelle vermieden werden.

Vorteilhaft ist ferner, dass auf diese Weise der Haltebügel bzw. dessen offenes Ende im Wesentlichen immer an derselben Position relativ zum Befestigungsbügel bzw. zum Gürtel der Person angeordnet werden können. Dies kann das taktile Auffinden des offenen Endes des Haltebügels für die Person und damit das Aufstecken der Werkstoffrolle auf das offene Ende des Haltebügels deutlich erleichtern und beschleunigen, insbesondere ohne hinsehen zu müssen.

Gemäß einem weiteren Aspekt der vorliegenden Erfindung sind der Haltebügel und der Befestigungsbügel einstückig ausgebildet. Dies kann die Herstellung vereinfachen. Insbesondere eine Montage einzelner Bestandteile der erfindungsgemäßen Gürtelhalterung kann auf diese Weise vermieden werden. Vorzugsweise kann eine derartige einstückige Gürtelhalterung durch das Biegen von Metalldraht hergestellt werden.

Gemäß einem weiteren Aspekt der vorliegenden Erfindung ist der Befestigungsbügel feststehend ausgebildet. Dies bedeutet, dass keine wesentliche Beweglichkeit der Seiten des Befestigungsbügels in radialer Richtung und insbesondere keine wesentliche Federwirkung in radialer Richtung vorhanden sind. Auf diese Weise kann der Befestigungsbügel z.B. durch Einstecken zwischen den Gürtel und den Hosenbund befestigt bzw. getragen werden. Dies kann die Herstellung des Befestigungsbügels sehr einfach machen. Gleichzeitig kann die Gürtelhalterung einfach und schnell angelegt und auch abgenommen werden.

Gemäß einem weiteren Aspekt der vorliegenden Erfindung ist der Befestigungsbügel als Federbügel ausgebildet. Hierunter ist zu verstehen, dass der Befestigungsbügel ausgebildet ist, in radialer Richtung eine Federkraft zwischen seinen Seiten bzw. Flanken oder Schenkeln auszuüben. Diese Federkraft kann auf einen Gürtel beidseitig in radialer Richtung wirken, wenn der Befestigungsbügel, vorzugsweise von oben, auf den Gürtel aufgesteckt ist. Hierdurch kann eine verbesserte Befestigung der Gürtelhalterung am Gürtel der Person durch Federkraft in radialer Richtung beidseitig auf den Gürtel statt lediglich durch Einstrecken zwischen Gürtel und Hosenbund erreicht werden.

Gemäß einem weiteren Aspekt der vorliegenden Erfindung ist der Befestigungsbügel in Querrichtung flächig ausgebildet. Hierdurch kann eine flächige Kraftübertragung auf den Gürtel erreicht werden. Auf diese Weise können punktförmige bzw. linienförmige Druckstellen am Gürtel vermieden werden, welche zu Beschädigungen des Gürtels durch lokal starke Belastungen führen können. Auch können punktförmige bzw. linienförmige Druckstellen am Gürtel vermeiden werden, welche von der Person als unangenehm empfunden werden können.

Gemäß einem weiteren Aspekt der vorliegenden Erfindung ist bzw. sind der Haltebügel und bzw. oder der Befestigungsbügel aus Metall. Hierdurch kann eine robuste und haltbare Gürtelhalterung geschaffen werden. Auch kann eine Federwirkung sowohl des Haltebügels als auch des Befestigungsbügels einfach realisiert werden. Ferner kann eine feststehende Anordnung des Haltebügels am Befestigungsbügel auf diese Weise einfach realisiert werden.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung einer erfindungsgemäßen Gürtelhalterung von schräg vorne;
- Fig. 2: eine perspektivische schematische Darstellung einer erfindungsgemäßen Gürtelhalterung der Fig. 1 von schräg hinten;
- Fig. 3: eine perspektivische schematische Darstellung einer erfindungsgemäßen Gürtelhalterung der Fig. 1 von der Seite;
- Fig. 4: eine perspektivische schematische Darstellung einer erfindungsgemäßen Gürtelhalterung der Fig. 1 von oben;
- Fig. 5: eine perspektivische schematische Darstellung einer erfindungsgemäßen Gürtelhalterung der Fig. 1 von schräg oben mit aufgenommener Werkstoffrolle; und
- Fig. 6: eine perspektivische schematische Darstellung einer erfindungsgemäßen Gürtelhalterung der Fig. 1 von oben mit aufgenommener Werkstoffrolle.

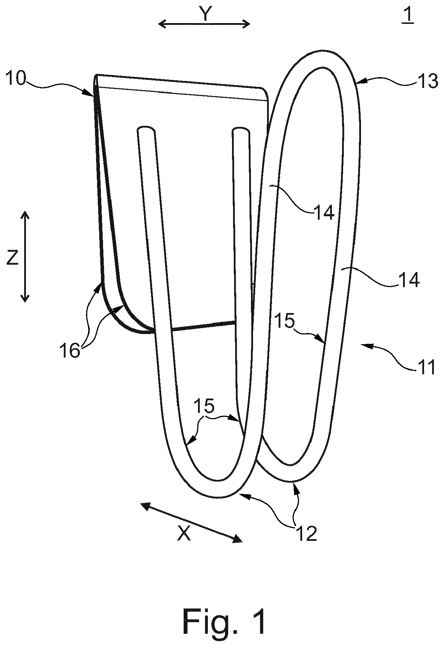

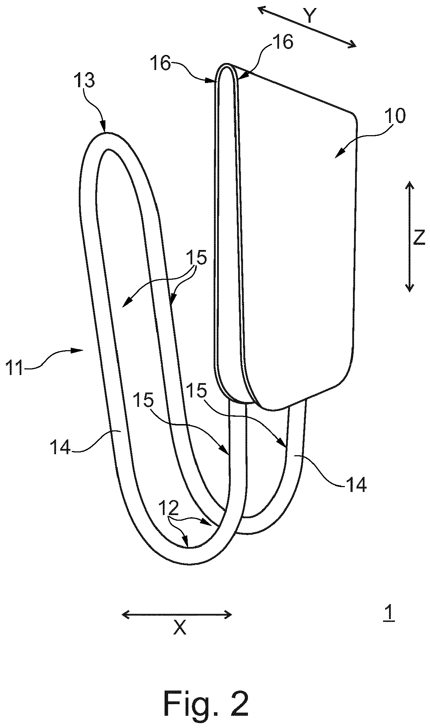

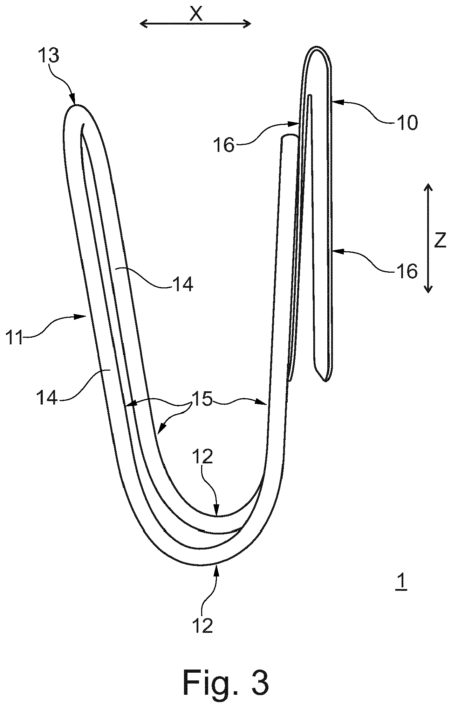

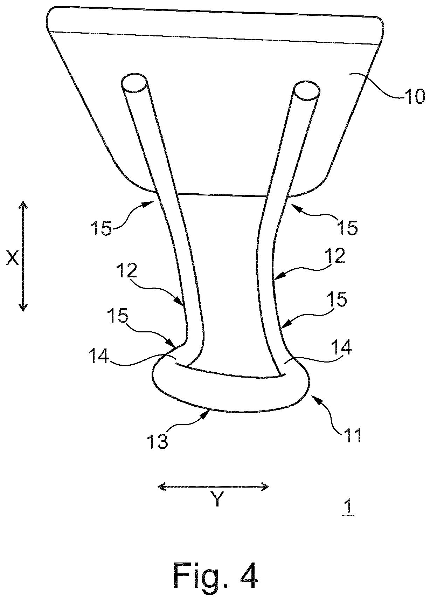

Fig. 1 zeigt eine perspektivische schematische Darstellung einer erfindungsgemäßen Gürtelhalterung 1 von schräg vorne. Fig. 2 zeigt eine perspektivische schematische Darstellung einer erfindungsgemäßen Gürtelhalterung 1 der Fig. 1 von schräg hinten. Fig. 3 zeigt eine perspektivische schematische Darstellung einer erfindungsgemäßen Gürtelhalterung 1 der Fig. 1 von der Seite. Fig. 4 zeigt eine perspektivische schematische Darstellung einer erfindungsgemäßen Gürtelhalterung 1 der Fig. 1 von oben.

Die erfindungsgemäße Gürtelhalterung 1 für eine Werkstoffrolle 2 erstreckt sich in einer radialen Richtung X, welche auch als Tiefe X bezeichnet werden kann. Hierzu senkrecht erstreckt sich eine Querrichtung Y, welche auch als Breite Y bezeichnet werden kann. Senkrecht sowohl zur radialen Richtung X als auch zur Querrichtung Y erstreckt sich eine senkrechte Richtung Z, welche auch als Höhe Z bezeichnet werden kann.

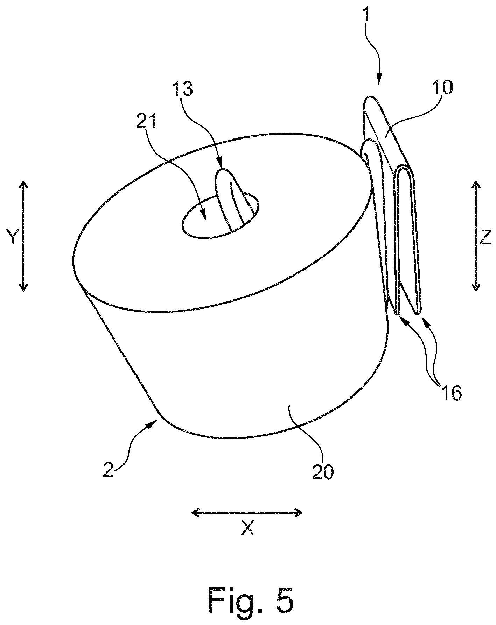

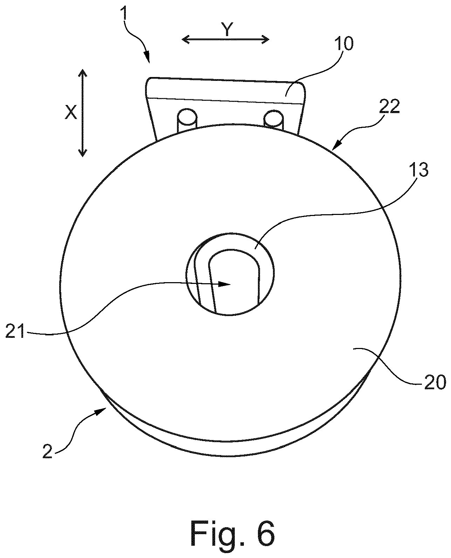

Die erfindungsgemäße Gürtelhalterung 1 dient der Aufnahme und Halterung einer Werkstoffrolle 2 wie z.B. einer Gipsbinderrolle 2, siehe Fig. 5 und 6, am Gürtel einer Person (nicht dargestellt). Die Gürtelhalterung 1 besteht aus einem Befestigungsbügel 10 und aus einem Haltebügel 11, welche jeweils aus Stahl einstückig hergestellt und mittels mehrerer Schweißpunkte einteilig miteinander verbunden sind, siehe z.B. Fig. 1, 3 und 4.

Der Befestigungsbügel 10 ist in dem dargestellten Ausführungsbeispiel als Federbügel 10 ausgeführt. Der Federbügel 10 besteht aus einem U-förmig gebogenen Stahlblech, dessen Flanken 16 in radialer Richtung X einen Abstand zueinander aufweisen, siehe z.B. Fig. 1 bis 3. Der Federbügel 10 ist in der Höhe Z nach unten hin offen angeordnet, so dass der Federbügel 10 in der Höhe Z von oben über einen Gürtel geschoben werden kann. Dabei ist der Abstand der beiden Flanken 16 in radialer Richtung X derart gewählt, dass durch die Flanken 16 beidseitig in radialer Richtung X auf einen Gürtel üblicher Dicke eine Federkraft ausgeübt werden kann, so dass die Gürtelhalterung 1 mittels des Federbügels 10 auch beim Hinsetzen oder Knien der Person sowie beim Ablegen des Gürtels sicher an diesem gehalten werden kann.

Der Haltebügel 11 besteht aus einem mehrfach umgebogenen Strang eines Stahldrahtes mit kreisrundem Querschnitt. Der Haltebügel 11 ist derart umgebogen, dass sich ein in der Höhe Z nach oben zeigendes rundes offenes Ende 13 bildet, welches in der radialen Richtung X von dem Federbügel 10 durch eine in der Höhe Z nach unten zeigende Senke 12 beabstandet ist. Dabei bildet der Strang des Haltebügels 11 von dem Federbügel 10 zum offenen Ende 13 jeweils einen Schenkel 14 aus, die an dem offenen Ende 13 ineinander übergehen. Dabei ist das offene Ende 13 in der Höhe Z nach oben und sich in der Querrichtung Y erstreckend rund ausgebildet, um ein Aufsetzen des Werkstoffrolle 2, insbesondere rein taktil ohne Hinsehen der Person, zu erleichtern und ferner Beschädigungen der Werkstoffrolle 2 und Verletzungen der Person bzw. Beschädigungen der Umgebung zu vermeiden. Gleichzeitig kann auf eine aufgenommene Werkstoffrolle 2 von innen eine klemmende Wirkung durch das offene Ende 13 in Querrichtung Y ausgeübt werden.

Die Senke 12 des Haltebügels 11 ist in der Höhe Z nach unten hin zulaufend, d.h. sich verengend, ausgebildet. Der Stang des Haltebügels 11 bzw. die beiden Schenkel 14 des Haltebügels 11 bilden in diesem Bereich in radialer Richtung X zwischen dem Federbügel 10 auf der einen Seite und dem offenen Ende 13 auf der anderen Seite jeweils geradlinige Flanken 15, die V-förmig sich verengend bzw. zulaufend zur Senke 12 hin verlaufen, welche ebenfalls in der radialen Richtung X rund ausgebildet ist. Auch diese Rundung der Senke 12 sollen Beschädigungen der Werkstoffrolle 2 und Verletzungen der Person bzw. Beschädigungen der Umgebung vermeiden helfen. Das sich verengende Zulaufen der Flanken 15 dient der Klemmung der aufgenommenen Werkstoffrolle 2 in radialer Richtung X.

Fig. 5 zeigt eine perspektivische schematische Darstellung einer erfindungsgemäßen Gürtelhalterung 1 der Fig. 1 von schräg oben mit aufgenommener Werkstoffrolle 2. Fig. 6 zeigt eine perspektivische schematische Darstellung einer erfindungsgemäßen Gürtelhalterung 1 der Fig. 1 von oben mit aufgenommener Werkstoffrolle 2.

Die Werkstoffrolle 2 ist in diesem Ausführungsbeispiel eine Gipsbinderrolle 2, welche einen aufgerollten Werkstoff 20 in Form von Gipsbinder 20 aufweist, der auch als Glasfaser-Fugenstreifen 20 bezeichnet werden kann. Die Gipsbinderrolle 2 weist eine innenliegende Öffnung 21 auf, welche auch als Mittelloch 21 der Gipsbinderrolle 2 bezeichnet werden kann. Ein Ende 22 des aufgerollten Gipsbinders 20 zeigt aufgrund der Eigenspannung des Materials des Gipsbinders 20 das lose Ende 22 von der Gipsbinderrolle 2 weg.

Die Gipsbinderrolle 2 wird nun erfindungsgemäß durch die Gürtelhalterung 1 aufgenommen, indem die Gipsbinderrolle 2 von der Person in der Höhe Z von oben mit der innenliegenden Öffnung 21 der Gipsbinderrolle 2 auf das offene Ende 13 des Haltebügels 11 aufgesteckt wird. Dabei kann die Gipsbinderrolle 2 aufgrund des sich in der Höhe Z nach oben hin verengenden offenen Endes 13 beim Aufstecken in einem gewissen Maße selbsttätig in der Querrichtung Y ausgerichtet werden.

Im aufgesteckten Zustand wird die volle Gipsbinderrolle 2 nun im Wesentlichen klemmend zwischen den Flanken 14 der Senke 12 des Haltebügels 11 in radialer Richtung X gehalten, so dass die Person sich bewegen, hinknien, eine Leiter besteigen etc. kann, ohne dass die Gipsbinderrolle 2 störend in der Hand gehalten werden muss und ohne sich aus der klemmenden Halterung der erfindungsgemäßen Gürtelhalterung 1 lösen zu können. Wird die Gipsbinderrolle 2 nun benötigt, um eine gespachtelte Fuge abzudecken, so kann die Gipsbinderrolle 2 von der Person taktil erfasst und ohne Hinsehen gegriffen werden.

Ist der Gipsbinder 20 angewendet worden, kann nun die im Umfang reduzierte Gipsbinderrolle 2 wieder von der Person taktil und ohne Hinsehen zurück auf das offene Ende 13 des Haltebügels 11 der erfindungsgemäßen Gürtelhalterung 1 aufgesteckt werden. Die Gipsbinderrolle 2 kann dabei aufgrund des reduzierten Umfangs weiter in der Höhe Z nach unten auf das offene Ende 13 und in die Senke 12 hinein geschoben werden, so dass aufgrund der sich zunehmend verengenden Senke 12 des Haltebügels 11 die Gipsbinderrolle 2 bei jedem Umfang in der radialen Richtung Y sicher klemmend gehalten werden kann.

Gleichzeitig kann die sich durch den Gebrauch des Gipsbinders 20 im Umfang reduzierende Gipsbinderrolle 2 auch aufgrund des in der Höhe Z nach oben hin sich verengenden offenen Endes 13 auf dieses weiter in der Höhe Z nach unten hin aufgeschoben werden, weil sich das offene Ende 13 in der Höhe Z nach unten hin in der Querrichtung Y aufweitet. Gleichzeitig nimmt die Stabilität der Gipsbinderrolle 2 mit reduziertem Umfang zunehmend ab, so dass die Gipsbinderrolle 2 weicher wird und somit auf das offene Ende 13 weiter in der Höhe Z nach unten hin aufgeschoben werden kann. Auf diese Weise kann eine Klemmung der Gipsbinderrolle 2 von innen, d.h. durch das offene Ende 13 in der innenliegenden Öffnung 21, in Querrichtung Y erfolgen.

Hierdurch kann mit abnehmendem Umfang der Gipsbinderrolle 2 durch dessen Verbrauch eine zunehmende Klemmung von innen in Querrichtung Y erfolgen, wohingegen eine noch unverbrauchte Gipsbinderrolle 2 eher in radialer Richtung X zwischen den Flanken 15 der Senke 12 des Haltebügels 11 geklemmt werden kann. In beiden Fällen kann jedoch ein sicherer Halt der Gipsbinderrolle 2 an der erfindungsgemäßen Gürtelhalterung 1 sichergestellt werden.

Das lose Ende 22 des Gipsbinders 20 kann in allen Fällen aufgrund seiner Eigenspannung von innen an den Flanken 15 des Haltebügels 11 anliegen und hierdurch gegen Abrollen gesichert werden. Gleichzeitig kann das lose Ende 22 des Gipsbinders 2 auf jeden Fall vor Beschädigungen geschützt werden, weil es stets frei im Raum ohne Kontakt gehalten werden kann. Ferner können die Kanten des Gipsbinders 20 an den geradlinigen Flanken 15 bzw. der runden Senke 12 des Haltebügels 11 vor Knicken, Reiben etc. geschützt werden.

Auf diese Weise kann erfindungsgemäß eine Gipsbinderrolle 2 einfach und schnell aus den Händen einer Person gegeben, dabei gegen Abrollen gesichert und gleichzeitig vor Reißen, Knicken und bzw. oder Reiben geschützt und auch wieder einfach und schnell von der Person gegriffen werden.

### BEZUGSZEICHENLISTE (Teil der Beschreibung)

- X: radiale Richtung, Tiefe
- Y: Querrichtung, Breite
- Z: senkrechte Richtung, Höhe

- 1: Gürtelhalterung für Werkstoffrolle 2
- 10: Befestigungsbügel, Federbügel
- 11: Haltebügel
- 12: Senke des Haltebügels 11
- 13: offenes Ende des Haltebügels 11
- 14: Schenkel des Haltebügels 11
- 15: Flanken des Haltebügels 11 oberhalb der Senke 12
- 16: Flanken des Befestigungsbügels 10

- 2: Werkstoffrolle, Gipsbinderrolle
- 20: aufgerollter Werkstoff, aufgerollter Gipsbinder, aufgerollter Glasfaser-Fugenstreifen
- 21: innenliegende Öffnung bzw. Mittelloch der Werkstoffrolle 2
- 22: loses Ende der Werkstoffrolle 2

## Patentansprüche

1. Gürtelhalterung (1) für eine Werkstoffrolle (2), insbesondere für eine Gipsbinderrolle (2), mit
einem Befestigungsbügel (10) zur Befestigung der Gürtelhalterung (1) an einem Gürtel einer Person, und
einem Haltebügel (11) zur Aufnahme der Werkstoffrolle (2),
**dadurch gekennzeichnet, dass**
der Haltebügel (11) in der Höhe (Z) eine nach unten hin verengend zulaufende Senke (12) aufweist, welche ausgebildet ist, auf die aufgenommene Werkstoffrolle (2) in radialer Richtung (X) beidseitig von außen zumindest abschnittsweise eine Klemmwirkung ausüben zu können, und/oder dass
der Haltebügel (11) in der Höhe (Z) ein nach oben hin verengend zulaufendes offenes Ende (13) aufweist, welches ausgebildet ist, auf die aufgenommene Werkstoffrolle (2) in Querrichtung (Y) beidseitig von innen zumindest abschnittsweise eine Klemmwirkung ausüben zu können.

2. Gürtelhalterung (1) gemäß Anspruch 1,
wobei die Senke (12) des Haltebügels (11) in der Höhe (Z) unten rund ausgebildet ist.

3. Gürtelhalterung (1) gemäß Anspruch 1 oder 2,
wobei das offene Ende (13) des Haltebügels (11) in der Höhe (Z) oben rund ausgebildet ist.

4. Gürtelhalterung (1) gemäß einem der vorherigen Ansprüche,
wobei der Haltebügel (11) zwei Schenkel (14) aufweist, welche zueinander in Querrichtung (Y) beabstandet sind,
wobei die beiden Schenkel (14) gemeinsam die Senke (12) bilden und am offenen Ende (13) ineinander übergehen.

5. Gürtelhalterung (1) gemäß einem der vorherigen Ansprüche,
wobei der Haltebügel (11), insbesondere die beiden Schenkel (12), feststehend mit dem Befestigungsbügel (10) verbunden ist/sind.

6. Gürtelhalterung (1) gemäß einem der vorherigen Ansprüche,
wobei der Haltebügel (11) und der Befestigungsbügel (10) einstückig ausgebildet sind.

7. Gürtelhalterung (1) gemäß einem der vorherigen Ansprüche,
wobei der Befestigungsbügel (10) feststehend ausgebildet ist.

8. Gürtelhalterung (1) gemäß einem der Ansprüche 1 bis 6,
wobei der Befestigungsbügel (10) als Federbügel (10) ausgebildet ist.

9. Gürtelhalterung (1) gemäß einem der vorherigen Ansprüche,
wobei der Befestigungsbügel (10) in Querrichtung (Y) flächig ausgebildet ist.

10. Gürtelhalterung (1) gemäß einem der vorherigen Ansprüche,
wobei der Haltebügel (11) und/oder der Befestigungsbügel (10) aus Metall ist/sind.
